# EUROPEAN PATENT SPECIFICATION

(11) **EP 1 961 980 B1**
(45) Date of publication and mention of the grant of the patent: **02.09.2009**
(21) Application number: 07003552.2
(22) Date of filing: 21.02.2007
(51) Int. Cl.: F16C 17/02, F16C 33/10

(54) **Self-lubricating alignment bearing**
Ausrichtungslager mit Selbstschmierung
Palier d'alignement auto-lubrifiant

(43) Date of publication of application: 27.08.2008
(73) Proprietor: Chou, Ping-Hsien, North Dist Tainan, Taiwan, R.O.C. (TW)
(72) Inventor: Chou, Ping-Hsien, North Dist Tainan, Taiwan, R.O.C. (TW)
(74) Representative: Gassner, Wolfgang

(56) References cited:
- EP-A1- 0 204 359
- FR-A- 2 882 409
- US-A- 5 822 846
- US-A1- 2003 161 558

## Description

### 1. Field of the Invention

The present invention relates to a self-lubricating alignment bearing according to the preamble of claim 1.

Such a self-lubricating alignment bearing is known from US 2003/0161558 A.

### 2. Description of the Prior Art

A currently available alignment bearing normally is applicable in a fan assembly having a shaft extending into the alignment bearing such that the fan blades of the fan assembly are able to rotate.

When in operation, the rotation of the fan shaft inside the alignment bearing generates heat, which brings out the lubricant inside the alignment bearing to lubricate the rotational movement of the fan shaft. However, the rotational movement of the fan shaft somewhat spins out the lubricant and causes bad lubrication effect. Thus the life span of the alignment bearing is affected.

Further, the alignment bearing generally is composed of a sleeve and lubricant received inside the sleeve. When this type of alignment bearing is used with a fan assembly, air inside the sleeve may cause difficulty especially when the fan shaft is extended into the sleeve. Still further, since the lubricant is easily spun out to the bottom of the sleeve, it is quite difficult to allow the lubricant to flow back to the top of the sleeve. Consequently, the lubrication effect to the fan shaft is greatly affected.

To overcome the shortcomings, the present invention tends to provide an improved self-lubricating alignment bearing to mitigate the aforementioned problems.

According to the present invention, there is provided a self-lubricating alignement bearing according to claim 1.

The primary objective of the present invention is to provide a self-lubricating alignment bearing to allow the lubricant to returning passage defined inside sleeve to communication the first conical recess at the top of the sleeve and the second conical recess at the bottom of the sleeve such that lubricant at the bottom of the sleeve easily flows back to the top of the sleeve to continue provide lubrication effect.

Another objective of the present invention is that an annular recess is defined in a side face of a channel defined through the sleeve to refrain the lubricant from being spun out of the sleeve.

Other objects, advantages and novel features of the invention will become more apparent from the following detailed description when taken in conjunction with the accompanying drawings.

### IN THE DRAWINGS

Fig. 1 is an exploded perspective view of the alignment bearing of the present invention;
Fig. 2 is a schematic cross sectional view showing the combination of the alignment bearing of the present invention; and
Fig. 3 is a schematic cross sectional view showing that a fan shaft is extended into the channel of the alignment bearing of the present invention.

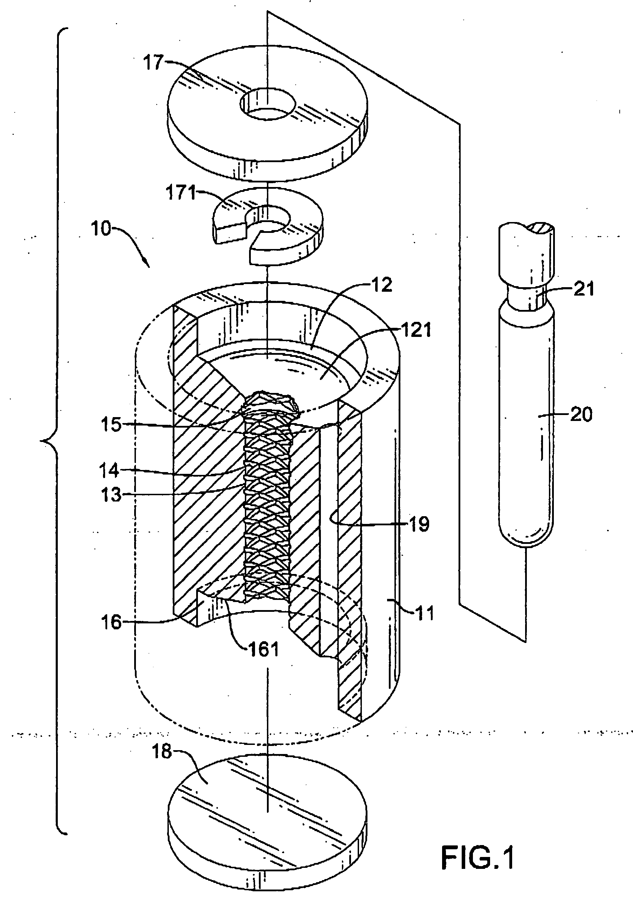

With reference to Fig. 1, it is noted that the alignment bearing (10) in accordance with the present invention include a sleeve (11) having a top recess (12) defined in a top portion of the sleeve (11), a channel (13) defined through the sleeve (11), multiple crossed grooves (14) defined in an inner periphery defining the channel (13) and a bottom recess (16) defined in a bottom portion of the sleeve (11) to communicate with the top recess (12) via the channel (13). In addition, a first conical recess (121) is defined to be in communication with the top recess (12) and the channel (13) and a second conical recess (161) is defined to be in communication with the bottom recess (16) and the channel (13). A returning passage (19) is longitudinally defined inside the sleeve (11) to communicate the top recess (12) with the bottom recess (16) and an annular recess (15) is defined in the inner periphery of the channel (13).

A bottom cap (18) is provided to be received in the bottom recess (16) and a top cap (17) is provided to be received in the top recess (12). Further, a C shaped ring (171) is to be received in the top recess (12).

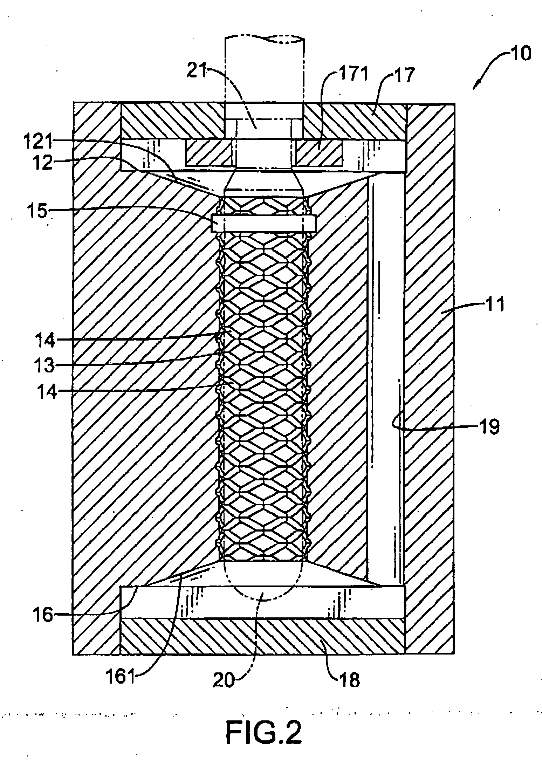

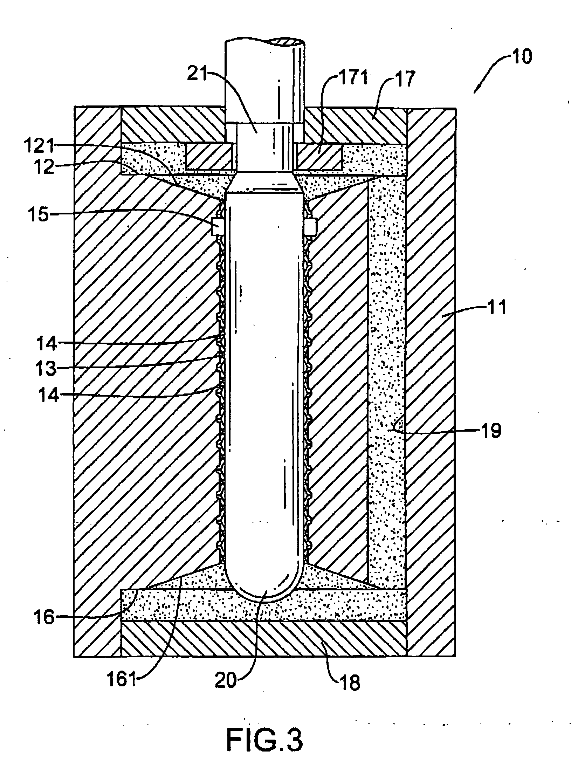

With reference to Figs. 2 and 3, after the assembly of the alignment bearing (10) of the present invention is finished, it is noted that the bottom cap (18) is received in the bottom recess (16) and before the top cap (17) is received in the top recess (12), a shaft (20) with a neck (21) is extended into the channel (13) with the C shaped ring (171) clamping in the neck (21).

From the depiction of the accompanying drawings, it is noted that with the provision of the returning passage (19), when the shaft (20) is extended into the channel (13), the air already received inside the channel (13) will be forced to flow to the second conical recess (161), the bottom recess (16), the returning passage (19), the first conical recess (121) and the top recess (12). Eventually the air escapes the sleeve (11) such that the shaft (20) is refrained from floating in the air inside the channel (13).

Before operation, the lubricant is able to flow downward from the first conical recess (121) and into the channel (13). Due to the formation of the crossed grooves (14) in the inner periphery of the channel (13), the downward flowing lubricant forms a lubrication screen to provide a perfect lubrication effect between the outer periphery of the shaft (20) and the inner periphery of the channel (13). When in operation, the rotation of the shaft (20) inside the sleeve (11) forces the lubricant to flow upward from the bottom recess (16) via the returning passage (19) to the first conical recess (121). Again, the lubricant in the first conical recess (121) is able to flow downward to the bottom recess (16) via the channel (13). Therefore, the lubricant is flowing up and down over and over again to provide the lubrication effect to the shaft (20) and the sleeve (11) as long as the shaft (20) is pining. Still further, due to the provision of the annular recess (15), should the lubricant flow upward inside the channel (13), the annular recess (15) functions as a buffer to stop the upward flowing lubricant from overflowing to the top recess (12).

## Claims

1. A self-lubricating alignment bearing (10) for a shaft (20), the self-lubricating alignment bearing (10) comprising:
a sleeve (11) having therein a top recess (12) defined in a top portion thereof, a bottom recess (16) defined in a bottom portion thereof to communicate with the top recess (12) via a longitudinally defined channel (13) in which the shaft (20) is rotatably received, a bottom cap (18) received in the bottom recess (16), a returning passage (19) defined inside the sleeve (11) to communicate the bottom recess (16) with the top recess (12), grooves (14) defined in an inner periphery of the channel (13),
**characterized in that**
the grooves (14) are crossed grooves (14), and
a C shaped ring is received in the top recess (12) to clamp a neck (21) on the shaft (20).

2. The self-lubricating alignment bearing (10) as claimed in claim 1 further comprising a first conical recess (121) defined in the sleeve (11) to communicate the channel (13) with the top recess (12) and a second conical recess (161) defined in the sleeve (11) to communicate the channel (13) with the bottom recess (16) so that lubricant is able to flow downward from the first conical recess (121) to the bottom recess (16) via the channel (13) and then flow upward from the bottom recess (16) to the first conical recess (121) via the returning passage (19) to provide lubrication effect to the shaft (20) and the sleeve (11).

3. The self-lubricating alignment bearing (10) as claimed in claim 1 further comprising an annular recess (15) defined in the inner periphery of the channel (13) for receiving therein lubricant so as to stop upward flowing lubricant from overflowing to the first conical recess (121).

## Patentansprüche

1. Selbstschmierendes Ausrichtungslager (10) für eine Welle (20), wobei das selbstschmierende Ausrichtungslager (10) umfasst:
eine Hülse (11), welche eine in ihrem oberen Abschnitt definierte obere Ausnehmung (12), eine in ihrem unteren Abschnitt definierte untere Ausnehmung (16) zum Verbinden mit der oberen Ausnehmung (12) über einen in Längsrichtung definierten Kanal (13), in welchem die Welle (20) drehbar aufgenommen ist, eine in der unteren Ausnehmung (16) aufgenommene untere Kappe (18), einen in der Hülse (11) definierten Rücklaufdurchgang (19) zum Verbinden der unteren Ausnehmung (16) mit der oberen Ausnehmung (12), in einer inneren Peripherie des Kanals (13) definierte Nuten aufweist,
**dadurch gekennzeichnet, dass**
die Nuten (14) gekreuzte Nuten (14) sind, und
ein C-förmiger Ring in der oberen Ausnehmung (12) zum Klemmen eines Halses (21) auf der Welle (20) aufgenommen ist.

2. Selbstschmierendes Ausrichtungslager (10) nach Anspruch 1, weiterhin umfassend eine in der Hülse (11) definierte erste konische Ausnehmung (121) zum Verbinden des Kanals (13) mit der oberen Ausnehmung (12) und eine in der Hülse (11) definierte zweite konische Ausnehmung (161) zum Verbinden des Kanals (13) mit der unteren Ausnehmung (16), so dass ein Schmiermittel von der ersten konischen Ausnehmung (121) abwärts zur unteren Ausnehmung (16) über den Kanal (13) fließen kann und dann von der unteren Ausnehmung (16) aufwärts zur ersten konischen Ausnehmung (121) über den Rücklaufdurchgang (19) fließen kann, um einen Schmiereffekt für die Welle (20) und die Hülse (11) bereitzustellen.

3. Selbstschmierendes Ausrichtungslager (10) nach Anspruch 1, weiterhin umfassend eine in der inneren Peripherie des Kanals (13) definierte ringförmige Ausnehmung (15) zum Aufnehmen von Schmiermittel, um aufwärts fließendes Schmiermittel vor dem Überfließen zur ersten konischen Ausnehmung (121) zu blockieren.

## Revendications

1. Un palier d'alignement autolubrifiant (10) pour un arbre (20), le palier d'alignement autolubrifiant (10) comprenant :
une douille (11) comportant une gorge supérieure (12) définie en une partie supérieure, une gorge inférieure (16) définie en une partie inférieure pour communiquer avec la gorge supérieure (12) via un canal (13) défini longitudinalement dans lequel l'arbre (20) est logé en rotation, un chapeau inférieur (18) logé dans la gorge inférieure (16), un passage de retour (19) défini à l'intérieur de la douille (11) pour que la gorge inférieure (16) communique avec la gorge supérieure (12), des rainures (14) définies dans une périphérie interne du canal (13),
**caractérisé en ce que**
les rainures (14) sont des rainures en croix (14), et
une bague en forme de C est logée dans la gorge supérieure (12) pour serrer un collet (21) sur l'arbre (20).

2. Le palier d'alignement autolubrifiant (10) selon la revendication 1, **caractérisé en ce qu'**il comporte en outre une première gorge conique (121) définie dans la douille (11) pour que le canal (13) communique avec la gorge supérieure (12) et une deuxième gorge conique (161) définie dans la douille (11) pour que le canal (13) communique avec la gorge inférieure (16) de façon telle que le lubrifiant puisse s'écouler vers le bas de la première gorge conique (121) vers la gorge inférieure (16) via le canal (13) et puis remonter de la gorge inférieure (16) vers la première gorge conique (121) via le passage de retour (19) pour produire un effet de lubrification sur l'arbre (20) et sur la douille (11).

3. Le palier d'alignement autolubrifiant (10) selon la revendication 1, **caractérisé en ce qu'**il comporte en outre une gorge annulaire (15) définie dans la périphérie interne du canal (13) pour y recevoir le lubrifiant de façon à empêcher le lubrifiant remontant de déborder vers la première gorge conique (121).
